(19) Europäisches Patentamt
European Patent Office
Office européen des brevets

(11) EP 0 789 053 B1

(12) EUROPÄISCHE PATENTSCHRIFT

(45) Veröffentlichungstag und Bekanntmachung des Hinweises auf die Patenterteilung:
**24.10.2001 Patentblatt 2001/43**

(51) Int Cl.[7]: **C08K 5/50**, C08K 5/54, C08L 69/00

(21) Anmeldenummer: **97101413.9**

(22) Anmeldetag: **30.01.1997**

(54) **Stabilisatormischungen und ihre Verwendung in Polycarbonaten**

Stabiliser mixtures and their application in polycarbonates

Mélanges de stabilisants et leur utilisation dans les polycarbonates

(84) Benannte Vertragsstaaten:
**BE DE ES IT NL**

(30) Priorität: **12.02.1996 DE 19604990**

(43) Veröffentlichungstag der Anmeldung:
**13.08.1997 Patentblatt 1997/33**

(73) Patentinhaber: **BAYER AG**
**51368 Leverkusen (DE)**

(72) Erfinder:
- **Meier, Helmut-Martin, Dr.**
  **40883 Ratingen (DE)**
- **Löwer, Hartmut, Dr.**
  **47802 Krefeld (DE)**
- **Ebert, Wolfgang, Dr.**
  **47800 Krefeld (DE)**
- **Haese, Wilfried, Dr.**
  **51519 Odenthal (DE)**

(56) Entgegenhaltungen:
**EP-A- 0 019 212**
**EP-A- 0 422 438**
**DE-A- 4 445 786**
**US-A- 4 367 303**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung sind Mischungen bestehend aus

A) Phosphinen der Formel (I)

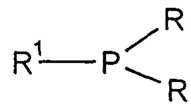 (I),

worin R ein unsubstituierter oder substituierter $C_6$-$C_{14}$-Aryl-Rest-ist und

worin $R^1$ einer der folgenden Reste (Ia) bis (Ih) ist

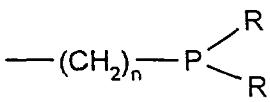 (Ia)

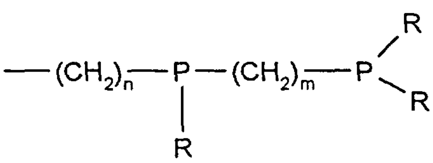 (Ib)

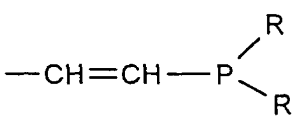 (Ic)

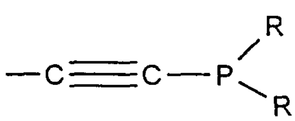 (Id)

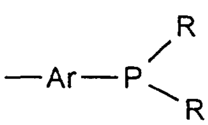 (Ie) mit Ar = $C_6$-$C_{14}$-Arylen,

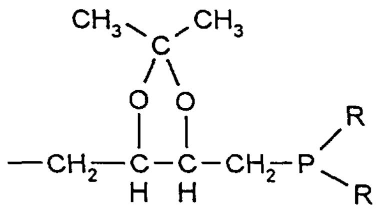

(If)

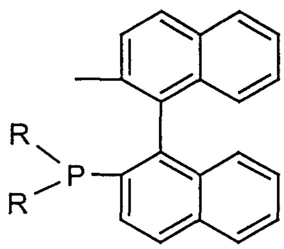

(Ig)

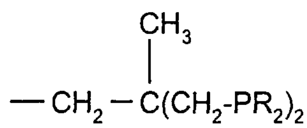

(Ih)

in denen R die für Formel (I) genannte Bedeutung hat,

"n" und "m" jeweils unabhängig voneinander eine ganze Zahl von 1 bis 7 sind;

wobei die H-Atome der Reste (Ia) bis (Ic) noch durch F, Cl, $CH_3$, $C_2H_5$,

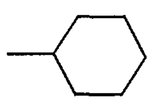 oder 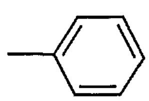 ersetzt sein können,

und

B) Silicium-Verbindungen der Formel (II)

$$R^2_a\text{-Si}(OR^3)_b \qquad (II)$$

worin a + b = 4, b mindestens 1, vorzugsweise 3 oder 4 ist, $R^2$ H oder $C_1$-$C_{18}$-Alkyl, $C_2$-$C_{18}$-Alkenyl, $C_6$-$C_{24}$-Aryl, $C_7$-$C_{24}$-Alkylaryl oder $C_7$-$C_{24}$-Aralkyl und $R^3$ $C_1$-$C_{18}$-Alkyl, $C_2$-$C_{18}$-Alkenyl, $C_5$-$C_{10}$-Cycloalkyl oder $C_7$-$C_{24}$-Aralkyl sind,

wobei das molare Verhältnis von (A) zu (B) zwischen 0,1 und 1,5 liegt.

Die erfindungsgemäßen Mischungen sind zur Stabilisierung von thermoplastischen Polycarbonaten geeignet.

Gegenstand der vorliegenden Erfindung ist somit auch die Verwendung der erfindungsgemäßen Mischungen zur Stabilisierung von thermoplastischen, aromatischen Polycarbonaten.

Mischungen aus Phosphinen und Siliciumverbindungen sind bekannt. (Siehe beispielsweise EP 43 998 (LeA 20 430) bzw. US-A 4 627 949 und DE-A 33 32 065 (Le A 22 588) sowie US-A 4 367 303).

Derartige Mischungen haben aber den Nachteil, daß die Phosphorgehalte groß sind, dadurch während der Langzeitalterung eine große Menge an oxidierten Phosphorverbindungen entsteht, die sich auf die Farbe der Polycarbonate letztlich negativ auswirkt.

Demgegenüber haben die erfindungsgemäßen Mischungen den Vorteil, daß die Phosphorgehalte klein sind; die Menge an oxidierten Phosphorstrukturen ebenfalls klein bleibt und gleichzeitig eine verbesserte Wirkung gegenüber dem Stand der Technik erreicht wird.

In der älteren deutschen Patentanmeldung P 44 45 786.3 (LeA 30 767) vom 21.12.1994 ist der Zusatz der Phosphine (I) zu Polycarbonaten beschrieben.

In der Komponente A sind bevorzugte Reste R in (I) Phenyl, 4-Phenyl-phenyl und Naphthyl.

Geeignete Substituenten der Arylreste R in (I) sind F, Cl, Br, J, $OCH_3$, CN, $C_1$-$C_5$-Alkylcarboxy, Phenyl, Cyclohexyl und $C_1$-$C_5$-Alkyl.

Bevorzugte Zahlen "n" und "m" sind 1, 2, 3 oder 4.

Beispiele für die erfindungsgemäß einzusetzenden Phosphine der Formel (I) sind

1,2-Bis-(di-pentafluorphenyl-phosphino)-ethan,
Bis-(diphenyl-phosphino)-acetylen,
1,2-Bis-(diphenylphophino)-benzol,

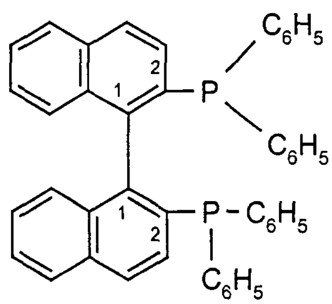

[2,2'-Bis-(diphenylphosphino)-1,1'-binaphthyl],
2,3-Bis-(diphenylphosphino)-butan,
1,4-Bis-(diphenylphosphino)-butan,
1,2-Bis-(diphenylphosphino)-ethan,
cis-1,2-Bis-(diphenylphosphino)-ethylen,

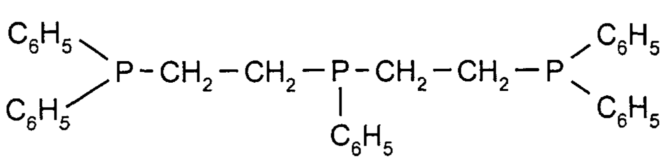

[Bis-(2-diphenylphosphino)-ethyl)-phenylphosphin],
Bis-(diphenylphosphino)-methan,
2,4-Bis-(diphenylphosphino)-pentan,
1-3-Bis-(diphenylphosphino)-propan,
1,2-Bis-(diphenylphosphino)-propan,

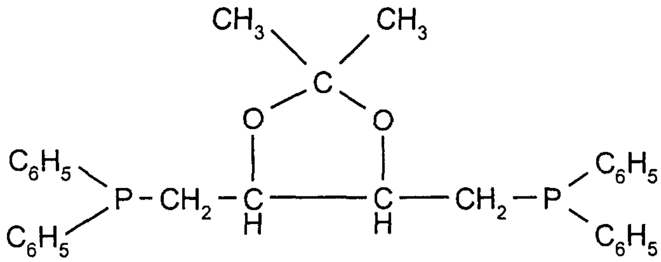

[4,5-O-Isopropylidin-2,3-dihydroxy-1,4-bis-(diphenylphosphino)-butan], und 1,1,1-Tris-(diphenylphosphino-methyl)ethan.

Die Verbindungen der Formel (I) sind entweder literaturbekannt oder können nach den folgenden Literaturhinweisen hergestellt werden:
Issleib et al., Chem. Ber., 92 (1959), 3175, 3179 und Hartmann et al., Zeitschr. Anorg. Ch. 287 (1956) 261, 264.
In den Siliciumverbindungen der Formel (II) können die Alkyl- und/oder Alkenyl-Reste linear oder verzweigt sein und Oxiran- oder Oxetan-Gruppen enthalten.
Die C-Reste $R^2$ und $R^3$ können beliebige, nicht basische, bei der thermoplastischen Verarbeitung der Polycarbonate thermisch stabile und inerte Substituenten enthalten wie beispielsweise Halogenatome, wie Chlor oder Brom, $C_1$-$C_{18}$-Alkoxygruppen, $C_6$-$C_{24}$-Aryloxygruppen, heterocyclische Reste mit Sauerstoff, Schwefel und/oder nicht basischen Stickstoffatomen, Ketogruppen, Estergruppen, Nitrilgruppen, Ethergruppen und/oder Thioethergruppen.
Bevorzugte Reste $R^2$ sind z.B.:
Methyl, Ethyl, Vinyl, Propyl, 3-Chlorpropyl, 3-Methacryloxypropyl, 3-Glycidyloxypropyl, Butyl, Pentyl, Hexyl, Cyclohexyl und Phenyl.
Bevorzugte Reste $R^3$ sind z.B.:
Butyl, Pentyl, Hexyl, Octyl, Stearyl, Decyl, Cyclohexyl, Methyl-cyclohexyl, (3-Methyloxetanyl-3)-methyl, (3-Ethyloxetanyl-3)-methyl, (3-Amyloxetanyl-3)-methyl, 2-Methoxy-ethyl, 3-Methoxy-propyl, 3-Methoxy-prop-2-yl, 3-Ethoxy-prop-2-yl, 3-Ethoxy-propyl, 3-(Thiomethyl)-propyl, (5-Ethyl-1,3-dioxanyl-5)-methyl und 2,3 Epoxy-propyl.
Die Siliciumverbindungen (II) sind entweder literaturbekannt (siehe beispielsweise EP-A-0 507 178 (LeA 28 232) oder nach bekannten Methoden herstellbar (siehe beispielsweise D. Ridge u.M. Todd, J. Chem. Soc. 1949, S. 2637-2640 oder V. Bavzant, V. Chvalovsky', J.Rathousky': Organosilicon Compounds, Bd. 1, S. 51-61, Academic Press, New York 1965).
Beispiele für die erfindungsgemäß einzusetzenden Siliciumverbindungen der Formel (II) sind

Tetrabutoxysilan,
Tetrapentoxysilan,
Tetrahexoxysilan,
Tetraoctoxysilan,
Tetradecoxysilan,
Tetrastearoxysilan,
Tetra-cyclohexoxysilan,
Tetrakis-(methyl-cyclohexoxy)-silan
Methyl-tributoxysilan,
Methyl-trihexoxysilan,
Methyl-trioctoxysilan,
Methyl-tridecoxysilan,
Methyl-tristearoxysilan,
Methyl-tri-cyclohexoxysilan,
Methyl-tris-(methyl-cyclohexoxy)-silan,
Vinyl-tributoxysilan,

Vinyl-trioctoxysilan,
Vinyl-trihexoxysilan,
Vinyl-tristearoxysilan,
Vinyl-tricyclohexoxysilan,

Vinyl-tris-(methyl-cyclohexoxy)-silan,
Tributoxysilan,
Trihexoxysilan,
Trioctoxysilan,
Tridecoxysilan,
Tetrakis-(2-oxyethyl-ethoxy)-silan,
Phenyl-tris-(3-methoxy-2-propoxy)-silan,
Methyl-tris-(2-oxyethyl-ethoxy)-silan,
Vinyl-tris-(2-oxyethyl-ethoxy)-silan,
Vinyl-tris-(2-methoxy-ethoxy)-silan,
Methyl-tris-(2-methoxy-ethoxy)-silan,
3-Chlorpropyl-triethoxysilan,
3 -Chlorpropyl-tributoxysilan,
3-Chlorpropyl-trihexoxysilan,
3-Chlorpropyl-trioctoxysilan,
3-Glycidylpropoxy-triethoxysilan,
3-Glycidylpropoxy-tributoxysilan,
3-Glycidylpropoxy-trihexoxysilan,
3-Glycidylpropoxy-trioctoxysilan,
Iso-butyl-tributoxysilan,
Iso-butyl-trioctoxy silan,
Tetrakis-(2-methoxyethoxy)-silan,
3-Methacryloxypropyl-trimethoxysilan,
Tetrakis-[(3-methyloxetanyl-3)-methoxy]-silan,
Tetrakis-[(3-ethyloxetanyl-3)-methoxy]-silan,
Tetrakis-[(3-amyloxetanyl-3)-methoxy]-silan,
Methyl-tris-[(3-methyloxetanyl-3)-methoxy]-silan,
Methyl-tris-[(3-ethyloxetanyl-3)-methoxy]-silan,
Dimethyl-bis-[(3-methyloxetanyl-3)-methoxy]-silan,
Dimethyl-bis-[(3-ethyloxetanyl-3-)-methoxy]-silan,
Phenyl-tris-[(3-ethyloxetanyl-3)-methoxy]-silan,
Tetrakis-[(5-ethyl-1,3-dioxanyl-5)-methoxy]-silan,
Methyl-tris-[(5-ethyl-1,3-dioxanyl-5)-methoxy]-silan,
Tetrakis-(2,3-epoxy-propoxy)-silan und
Methyl-tris-(2,3-epoxy-propoxy)-silan.

Die erfindungsgemäßen Mischungen aus A) und B) können sowohl ein Posphin als auch mehrere Phosphine enthalten und sowohl eine Siliciumverbindung als auch mehrere Siliciumverbindungen enthalten.

Die Herstellung der Mischungen aus den Komponenten A) + B) erfolgt beispielsweise dadurch, daß man die Komponenten bei Raumtemperatur oder leichter Erwärmung miteinander in inerter Atmosphäre vermischt.

Gegenstand der vorliegenden Erfindung ist somit auch ein Verfahren zur Herstellung der erfindungsgemäßen Mischungen aus den Komponenten A) + B), das dadurch gekennzeichnet ist, daß die Komponenten bei 20°C bis 100°C, vorzugsweise bei 30°C bis 80°C unter inerten Bedingungen miteinander vermischt werden.

Die erfindungsgemäßen Mischungen aus A) + B) können außerdem noch Silicium-freie Oxetanverbindungen (C) und/oder Silicium-freie Epoxidverbindungen (D) in Mengen von 1 bis 50 Gew.-%, vorzugsweise von 5 bis 20 Gew.-%, bezogen jeweils auf das Gewicht aus A) + B) enthalten.

Gegenstand der vorliegenden Erfindung sind somit auch Mischungen bestehend aus den Komponenten A) und B) in den erfindungsgemäßen Mengenverhältnissen, und 1 Gew.-% bis 50 Gew.-%, bezogen auf Gewicht aus A) + B), aus Silicium-freien Oxetanverbindungen (C) und/oder aus Silicium-freien Epoxidverbindungen (D).

Oxetanverbindungen (C) und Epoxidverbindungen (D) sind literaturbekannt (siehe beispielsweise EP 0 507 178, loc. cit, und die darin zitierte Literatur).

Geeignete Oxetanverbindungen (C) sind beispielsweise solche der Formel (IIIa)

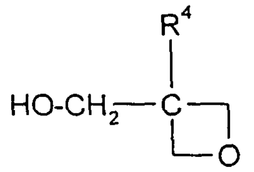

(IIIa)

worin

$R^4$ Wasserstoff, Methyl, Ethyl, Pentyl, Hexadecyl, Octadecyl, Cyclohexyl, Phenyl, p-Tolyl, Benzyl, Methoxymethyl, Ethoxymethyl, Octadecyloxymethyl, Phenoxymethyl, p-Tolyloxymethyl, Benzyloxymethyl, Phenoxy, p-Chlorphenoxy, p-tert.-Butylphenoxy und Acetyloxymethyl ist, oder der Formel (IIIb)

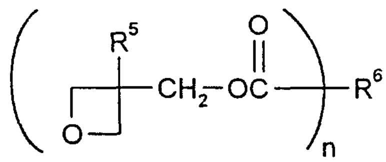

(IIIb)

worin

$R^5$ $C_1$-$C_{16}$-Alkyl und $R^6$ entweder ein n-bindiges $C_2$-$C_8$-Alkan, das noch durch OH-Gruppen substituiert sein kann, wobei n eine Zahl von 1 bis 6 ist oder ein 2-bindiges Cycloalkan, wobei n = 2 ist, sind.

Geeignete Epoxidverbindungen (D) sind beispielsweise epoxidgruppenhaltige Mischpolymere nach DOS 2 019 325, 3,4-Epoxycyclohexylmethyl-3,4-epoxycyclohexan-carboxylat und Bis-(3,4-epoxycyclohexyl)-adipat.

Die Zumischung der Oxetanverbindungen (C) und/oder der Epoxidverbindungen (D) erfolgt in bekannter Weise zur Phosphorkomponente A) oder zur Siliciumkomponente B) oder zu dem Gemisch aus A) + B) bei Raumtemperatur und bei Normaldruck.

Die Wirkung der Silicium-freien Oxetanverbindungen (C) im erfindungsgemäßen Gemisch aus A) + B) ist eine zusätzliche Verbesserung des Stabilisatorverhaltens.

Die Wirkung der Silicium-freien Epoxidverbindungen (D) mit erfindungsgemäßen Gemisch aus A) + B) ist ebenfalls eine Verbesserung des Stabilisatorverhaltens.

Gegenstand der vorliegenden Erfindung ist somit auch die Verwendung der erfindungsgemäßen Mischungen aus den Komponenten A) und B) mit Silicium-freien Oxetanverbindungen C) und/oder mit Silicium-freien Epoxidverbindungen D) zur Stabilisierung von thermoplastischen, aromatischen Polycarbonaten.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Ein Teil, bis zu 80 Mol-%, vorzugsweise von 20 Mol-%, bis zu 50 Mol-% der Carbonat-Gruppen in den erfindungsgemäß geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen der Einfachheit halber in vorliegender Anmeldung unter dem Oberbegriff der thermoplastischen, aromatischen Polycarbonate subsummiert werden.

Die Herstellung der erfindungsgemäß zu verwendenden Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt werden, und zwar je nach Maßgabe der in den aromatischen Polycarbonaten zu ersetzenden Carbonatstruktureinheiten durch aromatische Dicarbonsäureesterstruktureinheiten.

Einzelheiten der Herstellung von Polycarbonaten sind in Hunderten von Patentschriften seit etwa 40 Jahren niedergelegt. Beispielhaft sei hier nur auf "Schnell", Chemistry an Physics of Polycarbonates", Polymer Reviews, Volume 9, Interscience Publishers, New York, London, Sydney 1964, auf D.C. PREVORSEK, B.T. DEBONA and Y. KESTEN, Corporate Research Center, Allied Chemical Corporation, Morristown, New Jersey 07960, "Synthesis of Poly (ester Carbonate) Copolymers" in Journal of Polymer Science, Polymer Chemistry Edition, Vol. 19, 75-90 (1980), auf

D. Freitag, U. Grigo, P.R. Müller, N. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kircher und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die thermoplastischen Polycarbonate einschließlich der thermoplastischen, aromatischen Polyestercarbonate haben mittlere Molekulargewichte $\overline{M}w$ (ermittelt durch Messung der relativen Viskosität bei 25°C in $CH_2Cl_2$ und einer Konzentration von 0,5 g pro 100 ml $CH_2Cl_2$) von 12 000 bis 120 000, vorzugsweise von 18 000 bis 80 000 und insbesondere von 22 000 bis 60 000.

Für die Herstellung der erfindungsgemäß zu verwendenden Polycarbonate geeignete Diphenole sind beispielsweise Hydrochinon. Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1 -Bis-(4-hydroxyphenyl)-3,3,5-trimethylcyclohexan.

Besonders bevorzugte Diphenole sind 2,2-Bis-(4-hydroxyphenyl)-propan, 2,2-Bis(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1 -Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate wird nur ein Diphenol eingesetzt, im Falle der Copolycarbonate werden mehrere Diphenole eingesetzt.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol.

Geeignete Monocarbonsäuren sind Benzoesäure, Alkylbenzoesäuren und Halogenbenzoesäuren.

Bevorzugte Kettenabbrecher sind die Phenole der Formel (III)

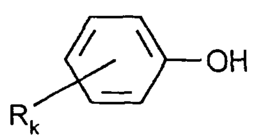

(III)

worin

$R_k$ ein verzweigter oder unverzweigter $C_8$- und/oder $C_9$-Alkylrest ist.

Die Menge an einzusetzendem Kettenabbrecher beträgt 0,5 Mol-% bis 10 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1 -Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)phenyl)-orthoterephthalsäureester, Tetra-(4-hydroxyphenyl)-methan, Tetra-(4-(4-hydroxyphenyl-isopropyl)-phenoxy)-methan und 1,4-Bis-( (4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureester-gruppen erfolgt im wesentlichen stöchiometrisch und auch quantitativ, so daß das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate sind das bekannte Grenzflächenverfahren und das bekannte Schmelzumesterungsverfahren.

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

Die einzusetzenden Stabilisatormengen betragen zwischen 0,001 und 1 Gew.-%, vorzugsweise zwischen 0,002 und 0,5 Gew.-% und insbesondere zwischen 0,005 und 0,2 Gew.-%, bezogen jeweils auf Gesamtgewicht an thermoplastischem Polycarbonat und Stabilisatormischung aus den Komponenten A) + B).

Gegenstand der vorliegenden Erfindung sind somit auch thermoplastische, aromatische Polycarbonate mit einem Gehalt an den erfindungsgemäßen Mischungen aus den Komponenten A) und B) in Mengen von 0,001 Gew.-% bis 1 Gew.-%, vorzugsweise von 0,002 Gew.-% bis 0,5 Gew.-% und insbesondere von 0,005 Gew.-% bis 0,2 Gew.-%, bezogen jeweils auf Gesamtgewicht an thermoplastischem Polycarbonat und Stabilisatormischung aus den Komponenten A) + B).

Gegenstand der vorliegenden Erfindung sind außerdem die thermoplastischen aromatischen Polycarbonate mit dem erfindungsgemäßem Gehalt an Stabilisatormischung aus A) + B) und zusätzlich mit einem Gehalt von 1 Gew.-% bis 50 Gew.-%, bezogen auf Gewicht aus A) + B), an Silicium-freien Oxetanverbindungen (C) und/oder Silicium-freien Epoxidverbindungen (D).

Die Einarbeitung der Stabilisatormischungen in die thermoplastischen, aromatischen Polycarbonate erfolgte vorteilhaft bei der Herstellung des Polycarbonates. Dabei können das Stabilisatormischungen während der Endphase der Herstellung, in welcher das geschmolzene Polycarbonat kontinuierlich in einer Förderschnecke unter Vakuum vom Lösungsmittel befreit wird, kontinuierlich durch eine geeignete Förderpumpe eingegeben werden. Selbstverständlich ist es außerdem möglich, das Polycarbonat auch nach seiner Herstellung mit der Stabilisatormischung zu stabilisieren durch sogenanntes Auftrudeln, diese Methode ist in den Beispielen dieser Anmeldung beschrieben. Dabei wird die Stabilisatormischung in Substanz oder gelöst in einem Lösungsmittel mit dem Polycarbonat vermischt und bei 270°C auf einem ZSK 32 Extruder compoundiert.

Geeignete Lösungsmittel für die Stabilisatormischungen sind Methylenchlorid, Isopropanol, Toluol, Methylethylketon und Tetrahydrofuran.

Gegenstand der vorliegenden Erfindung ist somit auch ein Verfahren zur Herstellung der stabilisierten, thermoplastischen, aromatischen Polycarbonate, das dadurch gekennzeichnet ist, daß Stabilisatormischungen aus den Komponenten A) und B) und gegebenenfalls C) und/oder D) während der Herstellung oder nach der Herstellung des thermoplastischen Polycarbonats in Substanz oder gelöst in einem Lösungsmittel mit dem Polycarbonat vermischt werden und auf einen Extruder compoundiert werden.

Zur Herstellung der stabilisierten Polycarbonate können die Komponenten A), B) und gegebenenfalls C) und/oder D) auch einzeln nacheinander in beliebiger Reihenfolge den Polycarbonaten einverleibt werden. Eine Vorabherstellung der jeweiligen Komponentenmischung ist also nicht unbedingt erforderlich.

Die Einarbeitung der Komponenten A), B) und gegebenenfalls C) und/oder D) in das Polycarbonat kann auch nach dem bekannten Masterbatch-Verfahren über ein Konzentrat im Polycarbonat erfolgen, welches dann durch Vermischen mit weiterem Polycarbonat auf die gewünschte Endkonzentration an erfindungsgemäßer Stabilisatormischung in der Polycarbonatformmasse verdünnt wird.

Die erfindungsgemäß erhältlichen Polycarbonate können zu Formkörpern jeder Art, also auch zu Folien in bekannter Weise verarbeitet werden. Die Verarbeitung zu Formkörpern erfolgt beispielsweise nach bekannten Spritzgießverfahren bei Temperaturen zwischen 270°C und 350°C.

Die erfindungsgemäß stabilisierten Polycarbonate finden besonders dort Anwendung, wo die hergestellten Formkörper einer längeren hohen Wärmebelastung ausgesetzt sind, und zudem für alle Gegenstände für die eine hohe Lichtdurchlässigkeit verlangt wird. Das gilt bevorzugt für die Verwendung auf dem lichttechnischen Sektor, z.B. für die Lampenabdeckungen oder Verglasungen mit Polycarbonatplatten, oder für optische Anwendungen wie Brillen und Compact Disks.

Gegenstand der vorliegenden Erfindung ist somit auch die Verwendung der erfindungsgemäß stabilisierten Polycarbonate zur Herstellung von Lampenabdeckungen, Verglasungen, Brillen und Compact Disks.

Die in den Beispielen genannten Teile sind Gewichtsteile.

Die erfindungsgemäß stabilisierten thermoplastischen Polycarbonate können auch mit anderen Thermoplasten in bekannter Weise abgemischt werden, beispielsweise mit ABS-Polymerisaten, Polystyrolen, Polyalkylenterephthalaten oder Polyarylensulfonen.

**<u>Herstellung eines Polycarbonats</u>**

In einem 3-Halskolben, ausgestattet mit Rührer und Gaseinleitungsrohr, werden 454 Teile 2,2-Bis-(p-hydroxyphenyl)-propan und 2,5 Teile p-tert.-Butylphenol in 1,5 1 Wasser suspendiert und anschließend der Sauerstoff aus der Reaktionsmischung entfernt, indem man unter Rühren 15 Minuten lang Stickstoff durch die Reaktionsmischung leitet. Dann werden 355 Teile 45%iger Natronlauge und 1000 Teile Methylenchlorid zugegeben. Die Mischung wurde auf 25°C abgekühlt. Unter Aufrechterhaltung dieser Temperatur durch Kühlen werden 237 Teile Phosgen während einer Zeitdauer von 120 Minuten zugegeben. Eine zusätzliche Menge von 75 Teilen einer 45%igen Natronlauge wurde nach 15 bis 30 Minuten zugegeben bzw. nachdem die Phosgenaufnahme begonnen hat. Zu der entstandenen Lösung werden 1,6 Teile Triethylamin zugegeben und die Mischung weitere 15 Minuten gerührt. Eine hochviskose Lösung wird erhalten, deren Viskosität durch Zugabe von Methylenchlorid reguliert wird. Die wäßrige Phase wird abgetrennt. Die organische Phase wird mit Wasser salz- und alkalifrei gewaschen. Das Polycarbonat wird aus der gewaschenen Lösung isoliert und getrocknet. Das Polycarbonat hat eine relative Viskosität von 1,29 bis 1,30, gemessen in einer 0,5%igen Lösung von Methylenchlorid bei 20°C. Das entspricht ungefähr einem Molekulargewicht von 32.000. Das so gewonnene Polycarbonat wird extrudiert und granuliert.

**<u>I. Herstellung stabilisierter Polycarbonate</u>**

Das vorstehende Polycarbonat mit einer rel. Viskosität von 1,295 wird mit den in den Beispielen aufgeführten Stabilisatoren auf einem ZSK 32 Extruder bei 270°C compoundiert. Die Produkte werden bei 300°C zu Normkleinstäben abgespritzt. Zum Vergleich wird das unstabilisierte Polycarbonat 1 x zusätzlich bei 270°C extrudiert. Dabei sinkt die rel. Viskosität auf 1,289.

**<u>II. Herstellung spezieller Phosphine</u>**

<u>Beispiel 1</u>

Unter Stickstoff wird eine Mischung aus

18,7 Gew.-% 1,2-Bis-(diphenylphosphino)-ethan und
81,3 Gew.-% Methyl-tris-[(3-ethyloxetanyl-3)-methoxy]-silan
durch Lösen bei 80°C hergestellt.
P-Gehalt: 2,9 %; Si-Gehalt: 5,8 %

Diese Mischung wird mit 0,2 % in Polycarbonat eingearbeitet.

<u>Beispiel 2</u>

Unter Stickstoff wird eine Mischung aus

19,8 Gew.-% 1,4-Bis-(diphenylphosphino)-butan und
80,2 Gew.-% Methyl-tris-[(3-ethyloxetanyl-3)-methoxy]-silan

durch Lösen bei 80°C hergestellt.
P-Gehalt: 2,8 %; Si-Gehalt: 5,7 %

Diese Mischung wird mit 0,2 % in Polycarbonat eingearbeitet.

**III. Vergleichsversuche**

Vergleichsbeispiel 1

Polycarbonat, das keinen Stabilisator enthält und wie oben beschrieben verarbeitet wurde.

Vergleichsbeispiel 2 (EP 213 413)

Polycarbonat, das 0,1 % Triphenylphosphin (Techno-Chemie) enthält und wie oben beschrieben verarbeitet wurde.
P-Gehalt von Triphenylphosphin: 11,8 %

Vergleichsbeispiel 3

Polycarbonat, das 0,1 % 1,2-Bis-(diphenylphosphino)-ethan enthält und wie oben beschrieben verarbeitet wurde.

Vergleichsbeispiel 4 (EP 43 998)

Unter Stickstoff wird eine Mischung aus

40 Gew.-% Triphenylphosphin und
60 Gew.-% Methyl-tris-[3-ethyloxetanyl-3)-methoxy]-silan
durch Lösen bei 80°C hergestellt.
P-Gehalt: 4,7 %; Si-Gehalt: 4,3 %

Diese Mischung wird mit 0,1 % in Polycarbonat eingearbeitet.

**IV. Ergebnisse**

Wärmealterung

Die in der oben beschriebenen Weise hergestellten Prüfkörper wurden im Trockenschrank bei 140°C getempert. Der jeweilige Anstieg des Yellowness-Index (Y.I.), gemessen nach ASTM 1925, im Verlauf der Wärmebehandlung dient als Maß für die zunehmende Verbräunung der Prüfkörper. Die Lichttransmission wird bei 420 nm nach DIN 5033, 4646 gemessen.

Hydrolysetest

Eine Anzahl Prüfkörper wird in destilliertem Wasser bei 100°C gelagert. Nach Ablauf bestimmter Zeitintervalle werden jeweils 10 Prüfkörper entnommen und daran die rel. Viskosität $\eta_{rel}$ (in Methylenchlorid bei 25°C in 0,5 Gew.-%) gemessen. Der Abfall von $\eta_{rel}$ ist ein Maß für die zunehmende Hydrolyse während der Wasserlagerung. Die Durchschnittswerte aus 10 Einzelmessungen sind in der nachfolgenden Tabelle aufgeführt.

| | Zeit (Std.) | Transmission % bei 420 nm | Y.I. | $\eta_{rel}$ |
|---|---|---|---|---|
| Beispiel 1 | 0 | 83,5 | 3,4 | 1,287 |
| | 1000 | 77,5 | 7,0 | 1,243 |
| Beispiel 2 | 0 | 83,5 | 3,5 | 1,281 |
| | 1000 | 77,0 | 7,6 | 1,162 |

(fortgesetzt)

| | Zeit (Std.) | Transmission % bei 420 nm | Y.I. | $\eta_{rel}$ |
|---|---|---|---|---|
| Vergleich 1 | 0 | 82,2 | 6,6 | 1,289 |
| | 1000 | 74,7 | 12,3 | 1,228 |
| Vergleich 2 | 0 | 83,4 | 5,0 | 1,289 |
| | 1000 | 80,7 | 11,7 | 1,248 |
| Vergleich 3 | 0 | 82,5 | 4,4 | 1,287 |
| | 1000 | 81,3 | 8,0 | 1,240 |
| Vergleich 4 | 0 | 84,1 | 4,8 | 1,289 |
| | 1000 | 72,3 | 10,9 | 1,244 |

**Patentansprüche**

**1.** Mischungen bestehend aus

A) Phosphinen der Formel (I)

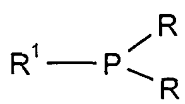

(I),

worin R ein unsubstituierter oder substituierter $C_6$-$C_{14}$-Aryl-Rest ist und

worin $R^1$ einer der folgenden Reste (Ia) bis (Ih) ist

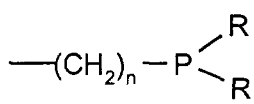

(Ia)

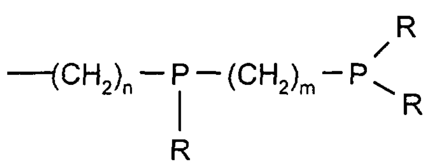

(Ib)

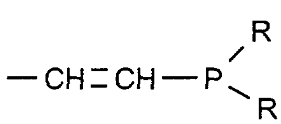

(Ic)

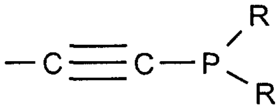 (Id)

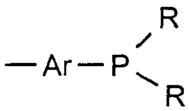 (Ie) mit Ar = $C_6$-$C_{14}$-Arylen,

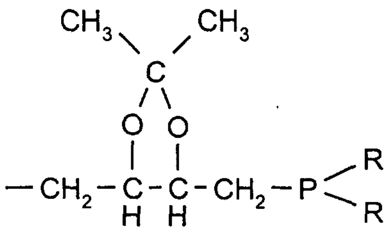 (If)

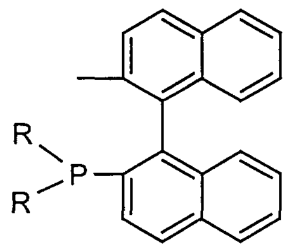 (Ig)

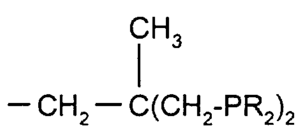 (Ih)

in denen R die für Formel (I) genannte Bedeutung hat,

"n" und "m" jeweils unabhängig voneinander eine ganze Zahl von 1 bis 7 sind,

und wobei die H-Atome der Reste (Ia) bis (Ic) noch durch F, Cl, $CH_3$,

$C_2H_5$, 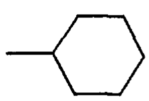 oder 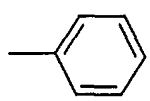 ersetzt sein können,

und

B) Silicium-Verbindungen der Formel (II)

$$R^2_a\text{-Si}(OR^3)_b \quad (II)$$

worin a + b = 4, b mindestens 1, $R^2$ = H oder $C_1$-$C_{18}$-Alkyl, $C_2$-$C_{18}$-Alkenyl, $C_6$-$C_{24}$-Aryl, $C_7$-$C_{24}$-Alkylaryl oder $C_7$-$C_{24}$-Aralkyl

und $R^3$ $C_1$-$C_{18}$-Alkyl, $C_2$-$C_{18}$-Alkenyl, $C_5$-$C_{10}$-Cycloalkyl oder $C_7$-$C_{24}$-Aralkyl sind,

wobei das molare Verhältnis von (A) zu (B) zwischen 0,1 und 1,5 liegt.

**2.** Verwendung der Mischungen des Anspruches 1 zur Stabilisierung von thermoplastischen, aromatischen Polycarbonaten.

**3.** Verfahren zur Herstellung der Mischungen des Anspruches 1, **dadurch gekennzeichnet, daß** die Komponenten bei 20°C bis 100°C unter inerten Bedingungen miteinander vermischt werden.

**4.** Mischungen gemäß Anspruch 1, bestehend zusätzlich aus 1 Gew.-% bis 50 Gew.-%, bezogen auf Gewicht aus A) + B), aus Silicium-freien Oxetanverbindungen (C) und/oder aus Silicium-freien Epoxidverbindungen (D).

**5.** Verwendung der Mischungen des Anspruches 4 zur Stabilisierung von thermoplastischen, aromatischen Polycarbonaten.

**6.** Thermoplastische, aromatische Polycarbonate mit einem Gehalt an den Mischungen des Anspruches 1 in Mengen von 0,001 Gew.-% bis 1 Gew.-%, bezogen jeweils auf Gesamtgewicht an thermoplastischem Polycarbonat und Stabilisatormischung aus A) + B).

**7.** Polycarbonate gemäß Anspruch 6 mit einem zusätzlichen Gehalt von 1 Gew.-% bis 50 Gew.-%, bezogen auf Gewicht aus A) + B), an Silicium-freien Oxetanverbindungen (C) und/oder Silicium-freien Epoxidverbindungen (D).

**8.** Verfahren zur Herstellung der Polycarbonate des Anspruches 6, **dadurch gekennzeichnet, daß** die Stabilisatormischungen des Anspruches 1 während der Herstellung oder nach der Herstellung des thermoplastischen Polycarbonats in Substanz oder gelöst in einem Lösungsmittel mit dem Polycarbonat vermischt werden und auf einem Extruder compoundiert werden.

**9.** Verfahren gemäß Anspruch 8, **dadurch gekennzeichnet, daß** die Stabilisatormischungen des Anspruchs 4 mit dem Polycarbonat vermischt werden und auf einem Extruder compoundiert werden.

**10.** Verwendung der Polycarbonate des Anspruchs 6 zur Herstellung von Lampenabdeckungen, Verglasungen, Brillen und Compact Disks.

## Claims

**1.** Mixtures comprising

A) phosphines of formula (I)

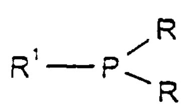

(I)

in which R is an unsubstituted or substituted $C_6$-$C_{14}$-aryl group and in which $R^1$ is one of the following groups (Ia) to (Ih)

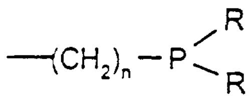

(Ia)

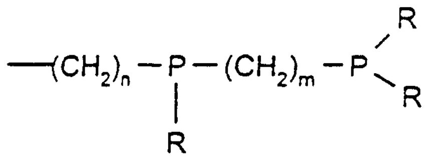

(Ib)

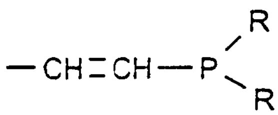

(Ic)

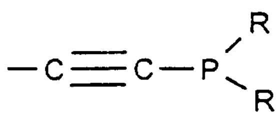

(Id)

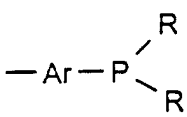

(Ie) with Ar = $C_6$-$C_{14}$-arylene,

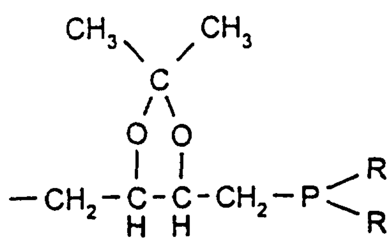

(If)

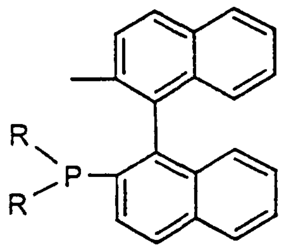

(Ig)

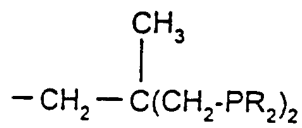

(Ih)

in which R has the meaning quoted for formula (I),

"n" and "m" are a whole number from 1 to 7, independently of each other in each case,

and wherein the H-atoms of the groups (Ia) to (Ic) can also be replaced by F, Cl, $CH_3$, $C_2H_5$,

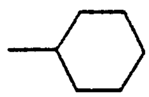

or

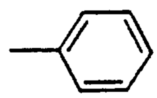

and

B) silicon compounds of formula (II)

$$R^2_a\text{-}Si(OR^3)_b \qquad (II)$$

in which a + b = 4, b is at least 1, $R^2$ is H or $C_1$-$C_{18}$-alkyl, $C_2$-$C_{18}$-alkenyl, $C_6$-$C_{24}$-aryl, $C_7$-$C_{24}$-alkylaryl or $C_7$-$C_{24}$-aralkyl and $R^3$ is $C_1$-$C_{18}$-alkyl, $C_2$-$C_{18}$-alkenyl, $C_5$-$C_{10}$-cycloalkyl or $C_7$-$C_{24}$-aralkyl,

wherein the molar ratio of (A) to (B) is between 0.1 and 1.5.

**2.** Use of the mixtures of Claim 1 for stabilizing thermoplastic aromatic polycarbonates.

**3.** Process for producing the mixtures of Claim 1, **characterized in that** the components are mixed with one another in inert conditions at 20°C to 100°C.

**4.** Mixtures according to Claim 1, additionally comprising 1 wt.% to 50 wt.%, related to weight of A) + B), of silicon-free oxetane compounds (C) and/or silicon-free epoxide compounds (D).

**5.** Use of the mixtures of Claim 4 for stabilizing thermoplastic aromatic polycarbonates.

**6.** Thermoplastic aromatic polycarbonates with a content of the mixtures of Claim 1 in quantities of 0.001 wt.% to 1 wt.%, related in each case to total weight of thermoplastic polycarbonate and stabilizer mixture comprising A) + B).

**7.** Polycarbonates according to Claim 6 with an additional content of 1 wt.% to 50 wt.%, related to weight of A) + B), of silicon-free oxetane compounds (C) and/or silicon-free epoxide compounds (D).

**8.** Process for producing the polycarbonates of Claim 6, **characterized in that** stabilizer mixtures of Claim 1 are mixed with the polycarbonate either solventless or dissolved in a solvent during or after the production of the thermoplastic polycarbonate and compounded on an extruder.

**9.** Process according to Claim 8, **characterized in that** the stabilizer mixtures of Claim 4 are mixed with the polycarbonate and compounded on an extruder.

**10.** Use of the polycarbonates of Claim 6 to produce lamp covers, glazing, spectacles and compact discs.

**Revendications**

**1.** Mélanges consistant en :

A) des phosphines de formule (I) :

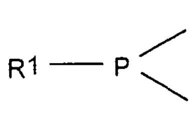
(I)

où R est un reste aryle en $C_6$-$C_{14}$ substitué ou non substitué, et où

$R^1$ est l'un des restes suivants (Ia) à (Ih) :

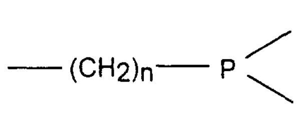
(Ia)

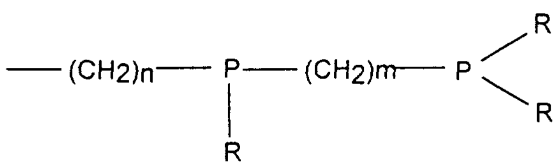
(Ib)

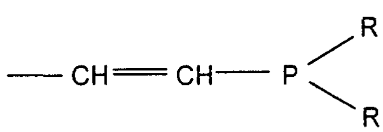
(Ic)

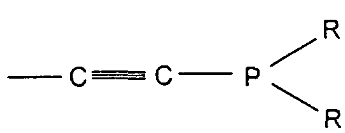
(Id)

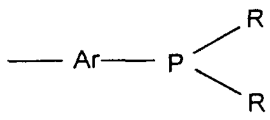

(Ie) avec Ar = arylène en $C_6$-$C_{14}$

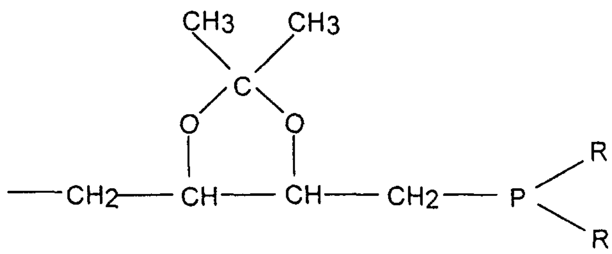

(If)

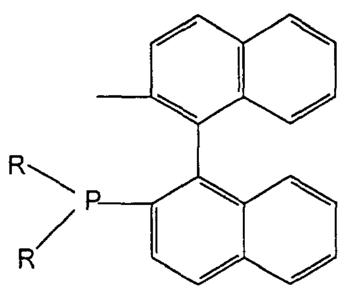

(Ig)

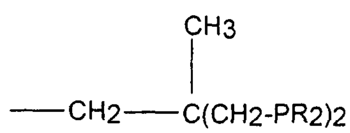

(Ih)

dans lesquels
R a la signification donnée pour la formule (I),
« n » et « m » sont chaque fois indépendamment l'un de l'autre, un nombre entier allant de 1 à 7,
et où les atomes H des restes (Ia) à (Ic) peuvent encore être remplacés par F, Cl, $CH_3$, $C_2H_5$,

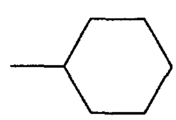

ou

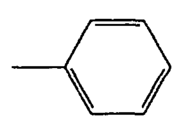

et

B) des composés du silicium de formule (II) :

$$R^2_a - Si(OR^3)_b \quad (II)$$

où a + b = 4, b vaut au moins 1,
$R^2$ représente H ou alcoyle en $C_1$-$C_{18}$, alcényle en $C_2$-$C_{18}$, aryle en $C_6$-$C_{24}$, alcoylaryle en $C_7$-$C_{24}$ ou aralcoyle en $C_7$-$C_{24}$, et

$R^3$ est alcoyle en $C_1$-$C_{18}$, alcényle en $C_2$-$C_{18}$, cycloalcoyle en $C_5$-$C_{10}$ ou aralcoyle en $C_7$-$C_{24}$, où le rapport molaire de (A) à (B) se situe dans l'intervalle allant de 0,1 à 1,5.

**2.** Utilisation des mélanges suivant la revendication 1, pour stabiliser des polycarbonates aromatiques thermoplastiques.

**3.** Procédé de préparation des mélanges suivant la revendication 1, **caractérisé en ce que** les composants sont mélangés l'un avec l'autre de 20°C à 100°C, dans des conditions inertes.

**4.** Mélanges suivant la revendication 1, consistant en outre, en 1% en poids à 50% en poids, sur base du poids de (A) + (B), en des composés oxétanne exempts de silicium (C) et/ou en des composés époxyde exempts de silicium (D).

**5.** Utilisation des mélanges suivant la revendication 4, pour stabiliser des polycarbonates aromatiques thermoplastiques.

**6.** Polycarbonates aromatiques thermoplastiques avec une teneur en les mélanges suivant la revendication 1, située dans l'intervalle allant de 0,001% en poids à 1% en poids, chaque fois sur base du poids total du polycarbonate thermoplastique et du mélange stabilisant (A) + (B).

**7.** Polycarbonates suivant la revendication 6, avec une teneur supplémentaire allant en 1% en poids à 50% en poids, sur base du poids de (A) + (B), de composés oxétanne exempts de silicium (C) et/ou de composés époxyde exempts de silicium (D).

**8.** Procédé de préparation des polycarbonates suivant la revendication 6, **caractérisé en ce que** les mélanges stabilisants suivant la revendication 1, sont mélangés au polycarbonate, pendant la préparation ou après la préparation du polycarbonate thermoplastique, tels quels ou dissous dans un solvant et sont incorporés à l'aide d'une extrudeuse.

**9.** Procédé suivant la revendication 8, **caractérisé en ce que** les mélanges stabilisants suivant la revendication 4 sont mélangés au polycarbonate et sont incorporés à l'aide d'une extrudeuse.

**10.** Utilisation des polycarbonates suivant la revendication 6, pour la préparation de revêtements de lampe, vitrages, lunettes et disques compacts.